# EUROPEAN PATENT APPLICATION

(11) **EP 2 009 540 A2**
(43) Date of publication of application: **31.12.2008**
(21) Application number: 08157440.2
(22) Date of filing: 02.06.2008
(51) Int. Cl.: G06F 1/32

(54) **Reproducer and reproducing method**

(30) Priority: 29.06.2007 JP 2007173274
(71) Applicant: Kabushiki Kaisha Toshiba, Minato-ku, Tokyo 105-8001 (JP)
(72) Inventor: Katsuhiko, Araki Toshiba Corporation, Minato-ku, Tokyo 105-8001 (JP)
(74) Representative: Henkel, Feiler & Hänzel

(57) **Abstract**

An acquiring unit (14) for acquiring content information and a playlist of the content information, processing units (11 to 14, 19, 20) for processing the content information by a plurality of processing modules (11 to 14, 19, 20) supplied with power to function, and managing units (16, 23) for managing power delivery to the plurality of processing modules (11 to 14, 19, 20) based upon the playlist, respectively, are included.

## Description

The present invention relates to a reproducer and a reproducing method for managing power delivery to a plurality of processing modules for content based upon a playlist.

As is well known, recently, with the development and spread of digital video technique, for example, many portable digital video reproducers and the like have been dealt with. In such portable digital video reproducers, particularly, there is a strong demand that the life of a battery unit is wanted to last for a long time, and a technique relating thereto has been known.

Since it has been known that a decoder unit and a DAC unit are not used in a recording mode, JP-A-2007-66478 discloses a technique for achieving power saving in the recoding mode by stopping power delivery to circuits in the decoder unit and the DAC unit.

In the technique described in JP-A-2007-66478, however, partial power saving depending on whether or not recording is performed is only performed. Therefore, since uniform power saving cannot be made at a time of recording, there is a problem that sufficient power saving cannot be made.

The present invention has been made in view of the above circumstance, and an object thereof is to provide a reproducer and a reproducing method capable of performing fine power saving to respective processing modules based upon a playlist.

According to one aspect of the present invention, there is provided a reproducer comprising: an acquiring unit configured to acquire content information and a playlist of the content information, a processing unit including a plurality of processing modules supplied with power to function, and configured to process the content information by the plurality of processing modules, and a managing unit configured to manage power delivery to the plurality of processing modules based upon the playlist, respectively.

According to another aspect of the present invention, there is provided a reproducing method comprising: a step of acquiring content information and a playlist of the content information, a step of managing power delivery based upon the playlist to a plurality of processing modules supplied with power to process the content information, and a step of reproducing the content information by the processing modules.

The invention can be more fully understood from the following detailed description when taken in conjunction with the accompanying drawings, in which:
FIG. 1 is a block configuration diagram shown for explaining a configuration of a reproducer according to an embodiment of the present invention;
FIG. 2 is a block configuration diagram shown for explaining a configuration of an engine unit provided in the reproducer according to the embodiment;
FIG. 3 is a flowchart shown for explaining one example of a power managing method for the reproducer according to the embodiment;
FIG. 4 is a diagram shown for explaining one example of a playlist which the reproducer according the embodiment uses for generation of a resource map;
FIG. 5 is a diagram shown for explaining one example of the resource map which the reproducer according to the embodiment generates;
FIG. 6 is a flowchart shown for explaining another example of a power managing method based upon the recourse map of the reproducer according to the embodiment; and
FIG. 7 is a view shown for explaining another example of the resource map which the reproducer according to the embodiment generates.

Hereinafter, one embodiment of the present invention will be explained in detail with reference to the drawings.

### <Example of reproducer according to embodiment of the present invention>

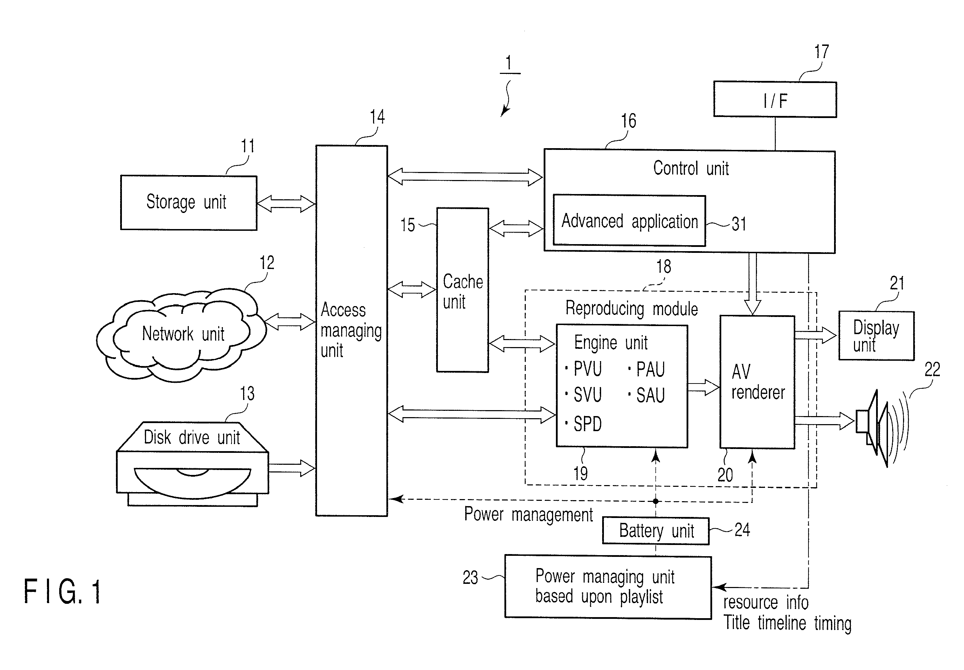

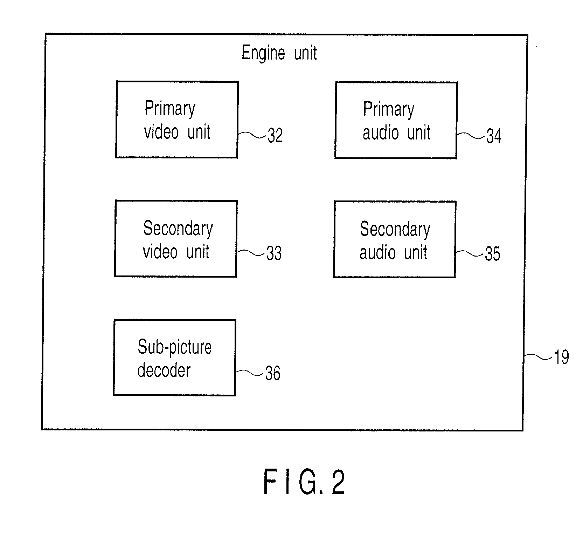

FIG. 1 is a block configuration diagram showing one example of a configuration of a reproducer according to an embodiment of the present invention. FIG. 2 is a block configuration diagram showing one example of an engine unit of the reproducer.

### (Configuration)

A reproducer 1 according to one embodiment of the present invention is, for example, a portable reproducer for such a content as a optical disk, and as shown in FIG. 1, comprises a storage unit 11 including a non-volatile storage region, an attachable and detachable memory, or the like capable of storing a content or the like, a network unit 12 including Internet, a wired/wireless LAN, or the like for accessing a server on the network, a disk drive unit 13 for handling an optical disk such as an HD DVD (High Definition Digital Versatile Disc) or the like, an access managing unit 14 for managing access with the storage unit 11, the network unit 12, the disk drive unit 13, and the like, a cache unit 15 for holding a storage region, a control unit 16 for controlling the whole operation, an I/F unit 17 for communicating with operation devices such as a remote controller and a front key, and a reproducing module unit 18 for performing a reproducing processing of a content.

As shown in FIG. 1, the reproducer 1 according to the embodiment of the present invention comprises an engine unit 19 included in the reproducing module unit 18 and including a plurality of processing modules, an AV renderer 20 for performing processing for producing a necessary audio signal and a necessary video signal, a display unit 21 including a liquid crystal display or the like, speaker units 22, a power managing unit 23 for performing power control of respective processing modules based upon a playlist as described later, a battery unit 24 for supplying power to the respective units, and an advanced application unit 31 for reproducing an advanced content from, for example, an HD DVD or the like.

Furthermore, as shown in FIG. 2, the engine unit 19 comprises a primary video unit 32 for handling a primary video, a secondary video unit 33 for handling a secondary video, a primary audio unit 34 for handling audio of the primary video, a secondary audio unit 35 for handling audio of the secondary video, and a sub-picture decoder 36 for handling subtitle information or the like.

### (Basic operation)

Next, basic operation of the abovementioned reproducer 1 will be explained below. The reproducer 1 acquires a stream of advanced contents via the access managing unit 14 from the storage unit 11, the network unit 12, or the disk drive unit 13 under control of the control unit 16. The stream is supplied to the advanced application unit 31, decoded therein, and outputted to the cache unit 15 or the like as a decoded signal.

The decoded signal is then supplied to the engine unit 19 of the reproducing module unit 18, and a primary video signal is processed by the primary video unit 32, a secondary video signal is processed by the secondary video unit 33, the audio of the primary video is processed by the primary audio unit 34, the audio of the secondary video is processed by the secondary audio unit 35, respectively. Further, if there is subtitle information or the like, it is processed by the subpicture decoder 36 and supplied to the AV renderer 20.

At the AV renderer 20, a video signal is processed so that it can be displayed on the display unit 21, and an audio signal is processed so that it can be reproduced by the speaker unit 22. In such a procedure, the reproducer 1 reproduces, for example, an advanced content, but, as described later, it is preferable that power management of the respective processing modules such as the engine unit 19 and the like is performed according to the playlist by the power managing unit 23 based upon the playlist.

### <Example of power control processing of reproducer according to embodiment of the present invention>

Hereinafter, one example of a power control processing of the reproducer according to the embodiment of the present invention will be explained in detail with reference to a flowchart and the like.

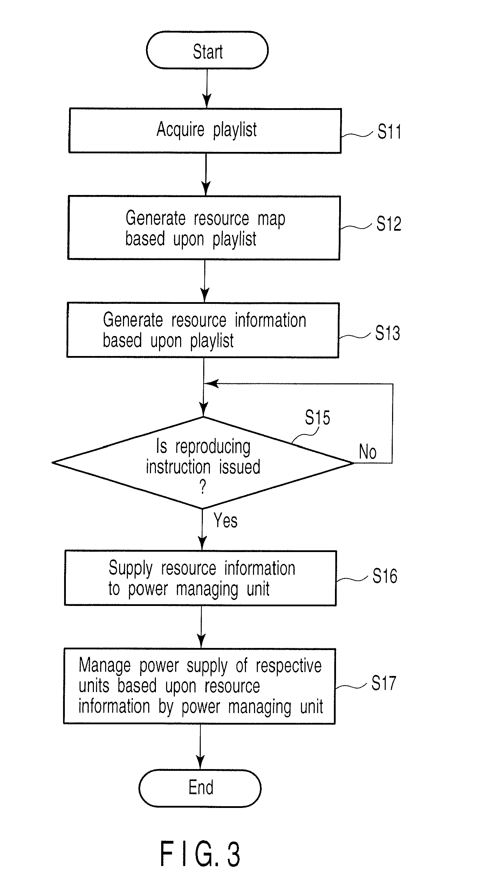

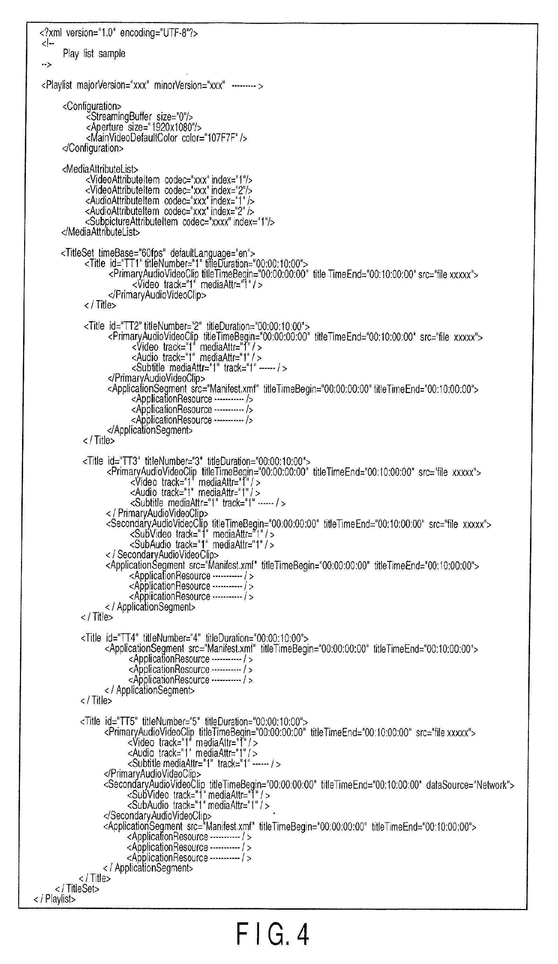

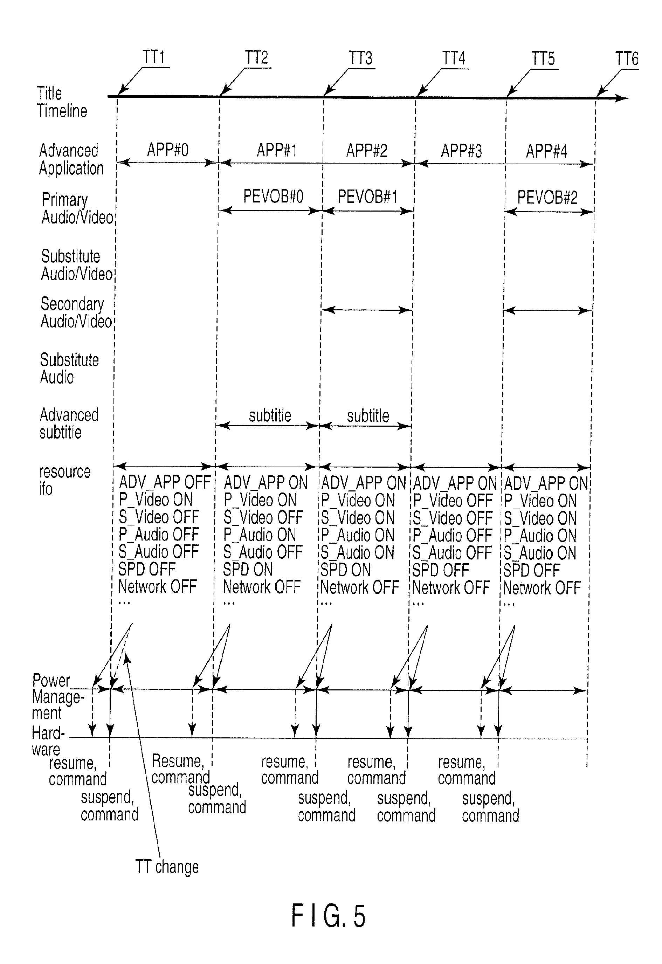

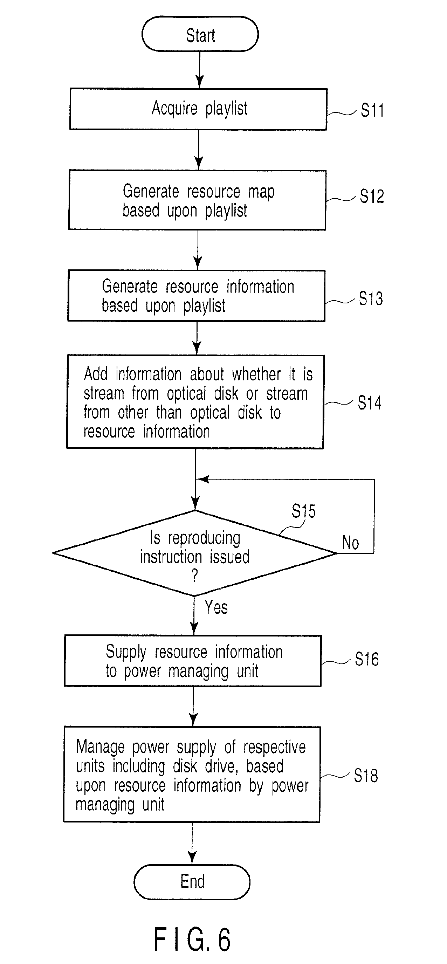

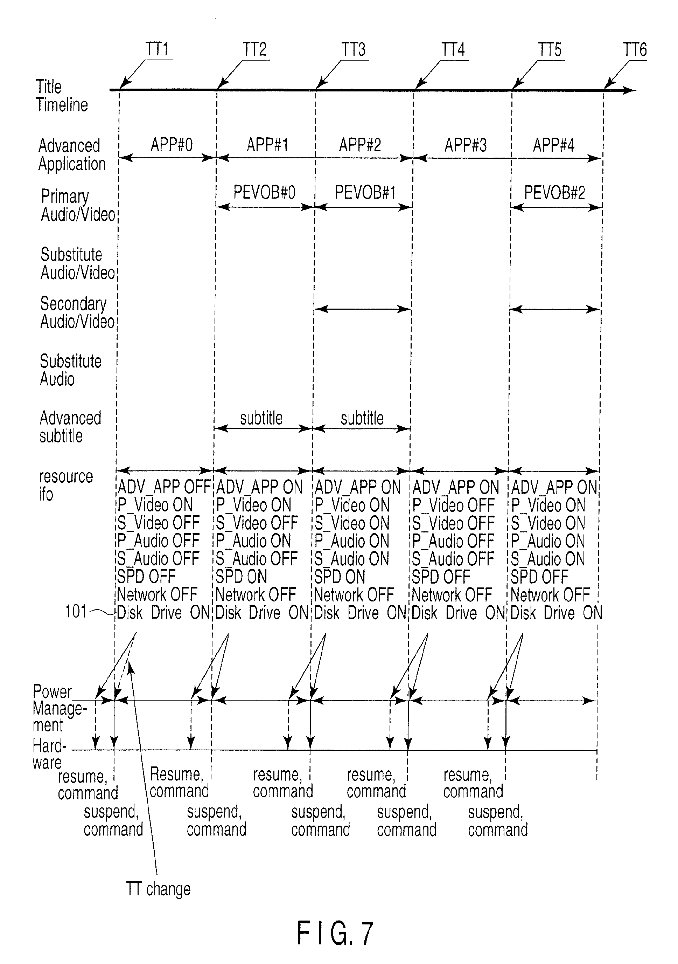

FIG. 3 is a flowchart showing one example of a power control processing of the reproducer according to the embodiment of the present invention. FIG. 4 is an explanatory diagram showing one example of a playlist used for generation of a resource map of the reproducer according to the embodiment of the present invention. FIG. 5 is an explanatory diagram showing one example of the resource map of the reproducer according to the embodiment of the present invention. FIG. 6 is a flowchart showing another example of a power managing method based upon the resource map of the reproducer according to the embodiment of the present invention. FIG. 7 is an explanatory diagram showing another example of the resource map of the reproducer according to the embodiment of the present invention.

Incidentally, the following respective steps of the flowcharts in FIG. 3 and FIG. 6 can be replaced with circuit blocks, therefore, all of the steps of the respective flowcharts can be redefined to blocks.

### (Example of power control processing)

Hereinafter, one example of the power control processing in the reproducer 1 according to the embodiment of the present invention will be explained with reference to the flowchart. Incidentally, hereinafter, as a power control processing for a power saving processing, ON/OFF of power delivery to the respective modules has been described. However, the power saving processing is not limited thereto and, for example, management of the modules such as stopping a clock to the respective modules may be used.

In the reproducer 1 according to the embodiment of the present invention, as shown in the flowchart in FIG. 3, the control unit 16 acquires playlist information as described later in FIG. 4 for example, via the access managing unit 14 or the like (step S11).

The playlist information described later in FIG. 4 determines, every Title Timeline Timing, whether or not, for example, the primary video unit 32, the secondary video unit 33, the primary audio unit 34, the secondary audio unit 35, or the sub-picture decoder 36 shown in FIG. 2, further, the advanced application unit 31, the disk drive unit 13 or the like shown in FIG. 1 is used.

Therefore, a resource map as shown in FIG. 5 is generated based upon the playlist by the control unit 16 and the power managing unit 23 (step S12). The resource map shows, every Title Timeline Timing, whether or not power should be supplied to the plurality of processing modules.

Next, resource information of the resource map as shown in FIG. 5 is generated based upon the playlist by the control unit 16 and the power managing unit 23 (step S13). Here, one example of the resource information of the resource map shown in FIG. 5 will be explained.

TT1 is, for example, a graphic video for warning for about 30 seconds, ADV_APP is OFF, P_Video is ON, S_Video is OFF, P_Audio is OFF, S_Audio is OFF, SPD (subtitles) is OFF, and network is OFF.

Next, TT2 is, for example, a main knitting video for about 2 hours such as a movie, ADV_APP is ON, P_Video is ON, S_Video is ON, P_Audio is ON, S_Audio is OFF, SPD (subtitles) is ON, and network is OFF.

Next, TT3 is, for example, a sub-video such as a filmmaking of a movie or the like, ADV_APP is ON, P_Video is ON, S_Video is ON, P_Audio is ON, S_Audio is ON, SPD (subtitles) is ON, and network is OFF.

Next, TT4 is, for example, a video such as an appendix video (graphic only) of a movie or the like, ADV_APP is ON, P_Video is OFF, S_Video is OFF, P_Audio is OFF, S_Audio is OFF, SPD (subtitles) is OFF, and network is OFF.

Next, TT5 is, for example, a video such as a second appendix video (moving image) of a movie or the like, ADV_APP is ON, P_Video is ON, S_Video is ON, P_Audio is ON, S_Audio is ON, SPD (subtitles) is OFF, and network is OFF.

In this state, when the control unit 16 receives a reproducing instruction from the remote controller or the like (step S15), the procedure proceeds to step S16, and the control unit 16 supplies resource information to the power managing unit 23 (step S16). Then, the control unit 16 and the power managing unit 23 manage power delivery from the battery unit 24 to the respective units (namely, the primary video unit 32, the secondary video unit 33, the primary audio unit 34, the secondary audio unit 35, the sub-picture decoder 36, further, the advanced application unit 31, the disk drive unit 13, and the like shown in FIG. 1), based upon the resource information supplied.

Thereby, for example, if it is TT1 described above, it is a graphic video of a warning for about 30 seconds, ADV_ APP is OFF, P_Video is ON, S_Video is OFF, P_Audio is OFF, S_Audio is OFF, SPD (subtitles) is OFF, and network is OFF. At this time, the control unit 16 and the power managing unit 23 supply the respective processing modules with, as one example, a resume command if the power supply is ON, and a suspend command if the power supply is OFF.

Therefore, the power delivery from the battery unit 24 to the respective units is OFF to the advanced application unit 31, ON to the primary video unit 32, OFF to the secondary video unit 33, OFF to the primary audio unit 34, OFF to the secondary audio unit 35, OFF to the sub-picture decoder 36, OFF to the network unit 12, so that a great deal of unnecessary power delivery to the units can be largely saved every Title Timeline Timing of the playlist.

### (Example of playlist)

Hereinafter, though giving one example of the playlist shown in FIG. 4, the embodiment of the present invention is not limited thereto. One example of the power control processing based upon the playlist will be explained with reference to the flowchart of FIG. 3.

```
 <?xml version="1.0" encoding="UTF-8"?>
 <!--
    Play list sample
 -->
 <Playlist majorVersion="xxx" minorVersion="xxx" -----
 ---- >
    <Configuration>
         <StreamingBuffer size="0"/>
         <Aperture size="1920x1080"/>
         <MainVideoDefaultColor color="107F7F"/>
    </Configuration>
    <MediaAttributeList>
         <VideoAttributeItem codec="xxx" index="1"/>
         <VideoAttributeItem codec="xxx" index="2"/>
         <AudioAttributeItem codec="xxx" index="1" />
         <AudioAttributeItem codec="xxx" index="2" />
         <SubpictureAttributeItem codec="xxxx"
 index="1"/>
    </MediaAttributeList>
    <TitleSet timeBase="60fps" defaultLanguage="en">
          <Title id="TT1" titleNumber="1"
 titleDuration="00:00:10:00">
                           <PrimaryAudioVideoClip
 titleTimeBegin="00:00:00:00" titleTimeEnd="00:10:00:00"
 src="file xxxxx">
                    <Video track="1" mediaAttr="1"/>
                    </PrimaryAudioVideoClip>
         </Title>
         <Title id="TT2" titleNumber="2"
 titleDuration="00:00:10:00">
                        <PrimaryAudioVideoClip
 titleTimeBegin="00:00:00:00" titleTimeEnd="00:10:00:00"
 src="file xxxxx">
                    <Video track="1" mediaAttr="1"/>
                    <Audio track="1" mediaAttr="1"/>
                    <Subtitle mediaAttr="1" track="1" -
 -----/>
                </PrimaryAudioVideoClip>
                                    <ApplicationSegment
 src="Manifest.xmf" titleTimeBegin="00:00:00:00"
 titleTimeEnd="00:10:00:00">
                   <ApplicationResource ----------- />
                   <ApplicationResource ----------- />
                    <ApplicationResource ----------- />
                 </ApplicationSegment>
           </Title>
           <Title id="TT3" titleNumber="3"
 titleDuration="00:00:10:00">
                          <PrimaryAudioVideoClip
 titleTimeBegin="00:00:00:00" titleTimeEnd="00:10:00:00"
 src="file xxxxx">
                    <Video track="1" mediaAttr="1"/>
                    <Audio track="1" mediaAttr="1"/>
                    <Subtitle mediaAttr="1" track="1" -
 -----/>
                    </PrimaryAudioVideoClip>
                      <SecondaryAudioVideoClip
 titleTimeBegin="00:00:00:00" titleTimeEnd="00:10:00:00"
 src="file xxxxx">
                    <SubVideo track="1" mediaAttr="1"/>
                    <SubAudio track="1" mediaAttr="1"/>
                    </SecondaryAudioVideoClip>
                                    <ApplicationSegment
 src="Manifest.xmf" titleTimeBegin="00:00:00:00"
 titleTimeEnd="00:10:00:00">
                    <ApplicationResource ----------- />
                    <ApplicationResource ----------- />
                    <ApplicationResource ----------- />
                    </ApplicationSegment>
            </Title>
          <Title id="TT4" titleNumber="4"
 titleDuration="00:00:10:00">
                                  <ApplicationSegment
 src="Manifest.xmf" titleTimeBegin="00:00:00:00"
 titleTimeEnd="00:10:00:00">
                   <ApplicationResource ----------- />
                   <ApplicationResource ----------- />
                   <ApplicationResource ----------- />
                    </ApplicationSegment>
            </Title>
            <Title id="TT5" titleNumber="5"
 titleDuration="00:00:10:00">
                         <PrimaryAudioVideoClip
 titleTimeBegin="00:00:00:00" titleTimeEnd="00:10:00:00"
 src="file xxxxx">
                    <Video track="1" mediaAttr="1"/>
                    <Audio track="1" mediaAttr="1"/>
                    <Subtitle mediaAttr="1" track="1" -
 -----/>
                    </PrimaryAudioVideoClip>
                      <SecondaryAudioVideoClip
 titleTimeBegin="00:00:00:00" titleTimeEnd="00:10:00:00"
 dataSource="Network">
                    <SubVideo track="1" mediaAttr="1"/>
                    <SubAudio track="1" mediaAttr="1"/>
                    </SecondaryAudioVideoClip>
                                    <ApplicationSegment
 src="Manifest.xmf" titleTimeBegin="00:00:00:00"
 titleTimeEnd="00:10:00:00">
                    <ApplicationResource ----------- />
                    <ApplicationResource ----------- />
                    <ApplicationResource ----------- />
                    </ApplicationSegment>
            </Title>
      </TitleSet>
 </Playlist>
```

The above can be obtained.

### ·Power management of the disk drive unit

Further, the power control processing performed by the control unit 16 and the power managing unit 23 of the reproducer which is one embodiment of the present invention is preferably directed to the disk drive unit 13. That is, when information about from where the stream is supplied can be obtained from the playlist, information about whether or not the disk drive unit 13 should be turned ON can be obtained as resource information.

Therefore, as shown in step S14 of the flowchart of FIG. 6, the control unit 16 determines whether the stream is one from an optical disk of the disk drive unit 13 or one from other than the optical disk, and as information 101 in FIG. 7, adds information about the determination to the resource information as ON/OFF information of the disk drive unit 13 (step S14). Thereby, it is preferable that the disk drive unit 13 is also directed to the power management. Further, the object of the power management is not limited to the abovementioned elements, and it is preferable that the power management is performed to more objects, based upon information shown by the playlist.

Hereinbefore, the power control processing shown by the reproducer 1 which is one embodiment of the present invention performs very sophisticated power control every Title Timeline Timing, every processing module, based upon control information shown by the playlist of the stream. Therefore, very ideal saving of electric power can be performed to a portable video reproducer and the like.

Incidentally, the present invention is not limited to the embodiment described above as it is, and in its implementation phase, can be embodied by changing components variously without departing from the scope thereof. Further, by combining suitably a plurality of components disclosed in the embodiment described above, various inventions can be formed. For example, some components may be removed from the whole components shown in the embodiment. Further, components according to another embodiment may be combined suitably.

## Claims

1. A reproducer **characterized by** comprising:
an acquiring unit (14) configured to acquire content information and a playlist of the content information;
a processing unit (11 to 14, 19, 20) including a plurality of processing modules (11 to 14, 19, 20) supplied with power to function, and configured to process the content information by the processing modules (11 to 14, 19, 20); and
a managing unit (16, 23) configured to manage power delivery to the processing modules (11 to 14, 19, 20) based upon the playlist, respectively.

2. The reproducer according to claim 1,
**characterized in that**
the managing unit (16, 23) is configured to generate a resource map according to the playlist, and manage power delivery to the processing modules (11 to 14, 19, 20) based upon the resource map.

3. The reproducer according to claim 2,
**characterized in that**
the managing unit (16, 23) is configured to generate a resource map, every title timeline, according to the playlist.

4. The reproducer according to claim 1,
**characterized in that**
the processing modules (11 to 14, 19, 20) of the processing unit (11 to 14, 19, 20) are configured to include a primary video unit (32), a secondary video unit (33), a primary audio unit (34), and a secondary audio unit (35).

5. The reproducer according to claim 1,
**characterized in that**
the processing module (11 to 14, 19, 20) of the processing units (11 to 14, 19, 20) is configured to include a sub-picture decoder (36).

6. The reproducer according to claim 1,
**characterized in that**
the processing modules (11 to 14, 19, 20) of the processing units (11 to 14, 19, 20) are configured to include an advanced application (31).

7. The reproducer according to claim 1,
**characterized in that**
the processing modules (11 to 14, 19, 20) of the processing units (11 to 14, 19, 20) are configured to include a disk drive (13).

8. A reproducing method **characterized by** comprising:
acquiring content information and a playlist of the content information (S11);
managing power delivery based upon the playlist to a plurality of processing modules (11 to 14, 19, 20) supplied with power to process the content information (S12 to S18); and
reproducing the content information by the processing modules (11 to 14, 19, 20).

9. The reproducing method according to claim 8,
**characterized in that**
the managing (S12 to S18) generates a resource map according to the playlist, and manages power delivery to the processing modules (11 to 14, 19, 20) based upon the resource map.

10. The reproducing method according to claim 9,
**characterized in that**
the managing (S12 to S18) generates a resource map, every title timeline, according to the playlist.
